Europäisches Patentamt

European Patent Office

Office européen des brevets

(19)

(11) Veröffentlichungsnummer: **0 066 037**
**B1**

## EUROPÄISCHE PATENTSCHRIFT

(12)

(51) Int. Cl.³: **G 08 G 1/09**

(45) Veröffentlichungstag der Patentschrift:
**12.09.84**

(21) Anmeldenummer: **82100825.7**

(22) Anmeldetag: **05.02.82**

(54) UKW-Empfänger für ein Verkehrsrundfunk-Übertragungssystem.

(30) Priorität: **27.05.81 DE 3121034**

(43) Veröffentlichungstag der Anmeldung:
**08.12.82 Patentblatt 82/49**

(45) Bekanntmachung des Hinweises auf die Patenterteilung:
**12.09.84 Patentblatt 84/37**

(84) Benannte Vertragsstaaten:
**AT CH FR GB IT LI**

(56) Entgegenhaltungen:
**DE - A - 2 533 946**
**DE - A - 2 651 484**
**DE - A - 2 725 068**

**RUNDFUNKTECHNISCHE MITTEILUNGEN, Band 18, Nr. 4, August 1974, Seiten 193-201, Hamburg (DE);**
**P.BRÄGAS: "Verkehrsrundfunk"**
**L'ONDE ELECTRIQUE, Band 60, Nr. 10, Oktober 1980, Seiten 33-38, Paris (FR); J.LEPAISANT et al.: "Codage en modulation de phase des émetteurs régionaux à modulation d'amplitude: application au radio-guidage"**

(73) Patentinhaber: **Blaupunkt-Werke GmbH,**
**Robert-Bosch-Strasse 200, D-3200 Hildesheim (DE)**

(72) Erfinder: **Eilers, Norbert, Dipl.-Phys., Seebothstrasse 19, D-3200 Hildesheim (DE)**
Erfinder: **Brägas, Peter, Ing. grad., Erlengrund 4, D-3201 Itzum (DE)**

(74) Vertreter: **Eilers, Norbert, Dipl.-Phys., Blaupunkt-Werke GmbH Robert-Bosch-Strasse 200, D-3200 Hildesheim (DE)**

## Beschreibung

Die Erfindung betrifft einen UKW-Empfänger für ein Rundfunkübertragungssystem gemäss Oberbegriff von Anspruch 1.

*Stand der Technik*

Seit einigen Jahren werden innerhalb des deutschen UKW-Rundfunknetzes und auch in benachbarten Ländern von Zeit zu Zeit Verkehrsnachrichten ausgesendet. Die Verkehrsfunksender, die solche Nachrichten mehr oder weniger regelmässig ausstrahlen, sind durch einen zusätzlich zur Nutzmodulation ausgestrahlten 57-kHz-Hilfsträger gekennzeichnet, der bei Stereo-Sendern als dritte Vielfache des 19-kHz-Stereo-Pilottons synchron mit diesem ausgestrahlt wird. Dabei ist der 57-kHz-Hilfsträger mit dem Pilotton phasenstarr verkoppelt mit Nulldurchgängen in der gleichen Richtung. Dieser Hilfsträger dient zugleich auch zur Übertragung zusätzlicher Informationen — auch Kennungen genannt —, die als Amplitudenmodulation des Hilfsträgers übertragen werden. (DBP 20 51 034)

Eine dieser Kennungen wird zusammen mit der Durchsage der Verkehrsnachricht ausgestrahlt. Sie zeigt also an, dass während ihrer Ausstrahlung über den UKW-Sender eine Nachricht zur Verkehrslage verbreitet wird und wird daher Durchsagekennung (DK) genannt. Die Durchsagekennung besteht aus einem sehr schmalen Frequenzband bei 125 Hz, welches den Hilfsträger mit 30% in seiner Amplitude moduliert.

Grundsätzlich können anderen Programmarten, z.B. Sportsendungen, andere Frequenzen als DK zugeordnet werden.

Mit dieser Durchsagekennung werden in einem für das System bestimmten Empfänger über einen 57-kHz-Detektor und einen Amplituden-Demodulator Umschalteinrichtungen in der NF-Stufe gesteuert; sei es zur Anhebung der Lautstärke während der Durchsage oder, wenn der Empfänger stummgeschaltet ist, zur Aufhebung der Stummschaltung oder bei kombinierten Radio-Cassetten-Recordern auch zur Umschaltung von Cassettenwiedergabe auf Wiedergabe der Verkehrsnachricht, wenn diese beginnt und zur Zurückschaltung auf Cassettenwiedergabe, wenn die Durchsage beendet ist.

Eine weitere vom Hilfsträger übertragene Information dient der Kennzeichnung von Verkehrsfunkbereichen. Alle UKW-Verkehrsfunksender, die in einem bestimmten geographischen Gebiet liegen, sind durch eine einheitliche Kennung — Bereichskennung (BK) — gekennzeichnet. Die Verkehrsnachrichten der Sender mit gleicher BK betreffen dasselbe geographische Gebiet. Diese Bereichskennung wird dem Hilfsträger kontinuierlich aufmoduliert. Sie moduliert die Amplitude des Hilfsträgers zu 60%. Die Bandbreite der einzelnen Bereichskennungen und deren Lage zueinander ist so gewählt, dass sich bei einer Güte von grösser 20 eine Nachbarkanaldämpfung von grösser 15 dB ergibt.

Innerhalb des verfügbaren Frequenzbandes unterhalb der Durchsagekennung hat man 6 Bereichskennungen festgelegt, wobei sichergestellt ist, dass die Harmonischen der Kennungen zwischen die anderen Kennungen fallen. (DBP 22 40 941)

Während einer Verkehrsdurchsage ist der Hilfsträger somit mit zwei Kennungen, der BK und der DK, moduliert, ausserhalb der Zeit der Verkehrsdurchsagen nur mit einer Kennung, der BK. Grundsätzlich kann auch jedem Verkehrsfunksender eine eigene BK zugeordnet sein, wenn die Zahl der verfügbaren BK dafür ausreicht.

In Suchlaufempfängern kann man das Vorhandensein des 57-kHz-Hilfsträgers dazu ausnutzen, den Suchlauf nur bei dem Empfang von Verkehrsfunksendern zu unterbrechen. Da 57 kHz die dritte Vielfache des 19-kHz-Pilottons ist, besteht die Gefahr, dass infolge von Nicht-Linearitäten im Sender oder Empfänger Oberwellen des 19-kHz-Pilottons auch bei Nicht-Verkehrsfunksendern entstehen. Daher hat man in dem Detektor für den 57-kHz-Hilfsträger einen Hilfszweig vorgesehen, der den Detektorausgang erst freigibt, wenn ein weiterer Detektor das Vorhandensein der Bereichskennung anzeigt. (DBP 25 33 946)

In einer neueren Schaltung wird der Modulationsgrad des Hilfsträgers durch die Bereichskennung gemessen und erst bei Feststellung des richtigen Modulationsgrades von 60% das Verweilen des Suchlaufs auf dem Verkehrsfunksender freigegeben.

Dieses Verkehrsfunksystem arbeitet in weiten Empfangsbereichen zur vollen Zufriedenheit. Doch zeigten sich unter erschwerten Empfangsbedingungen häufiger Fehlschaltungen bei der Auswertung der Durchsagekennung.

In einer gleichzeitig eingereichten Patentanmeldung (EP-A Nr. 65616) wird zur Vermeidung dieses Nachteils vorgeschlagen, während der Durchsage den Modulationsgrad des Hilfsträgers durch die Bereichskennung abzusenken, damit der Modulationsgrad durch die Durchsagekennung erhöht werden kann.

*Aufgabe und Lösung*

Es stellt sich von daher die Aufgabe, die Möglichkeiten dieser senderseitigen Modifikation zur Erkennung der Durchsagekennung im Empfänger voll auszuschöpfen.

Diese Aufgabe lässt sich mit den im Kennzeichen des Anspruchs 1 angegebenen Mitteln lösen, mit besonderen Vorteilen, wenn man die Mittel entsprechend den in den weiteren Ansprüchen angegebenen Merkmalen weiterbildet.

*Beschreibung*

Anhand der Zeichnung wird die Erfindung näher erläutert. Es zeigen

Fig. 1 ein Blockschaltbild eines UKW-Empfängers,

Fig. 2 ein Blockschaltbild des Verkehrsdecoders in einem UKW-Empfänger,

Fig. 3 den zeitlichen Verlauf des Modulationsgrades des Hilfsträgers nach einem modifizierten System,

Fig. 4 eine Messeinrichtung für die Auswertung des Modulationsgrades des Hilfsträgers durch die Bereichskennung.

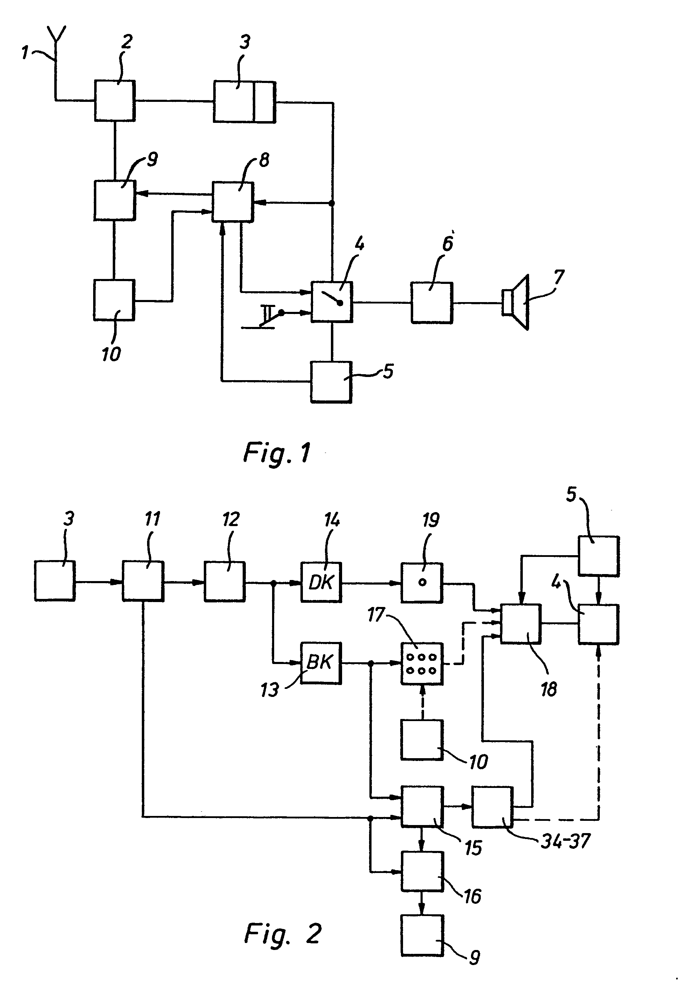

Der Empfänger in Fig. 1 erhält sein Eingangssignal über die Antenne 1. In der HF-Stufe 2 lässt sich der gewünschte Sender einstellen. An dem die nachfolgende ZF-Stufe 3 abschliessenden Ratio-Detektor ist die Sendernutzmodulation abnehmbar, die neben der für den Rundfunkteilnehmer bestimmten Nachricht einen amplitudenmodulierten 57-kHz-Hilfsträger enthält. Über eine Umschalteinrichtung 4 werden wahlweise die eben erwähnten Nachrichten oder die Signale eines Tonbandwiedergabegerätes 5 auf die NF-Stufe 6 gegeben, an die ein Lautsprecher 7 angeschlossen ist.

Die Steuerung der Umschalteinrichtung 4 erfolgt entweder willkürlich von Hand oder wird bei eingeschaltem Tonbandgerät von einem Verkehrsfunkdecoder 8 bewirkt, der ebenfalls an den Ausgang der ZF-Stufe 3 angeschlossen ist. Der Verkehrsfunkdecoder ist überdies mit einer Sendersuchlaufeinrichtung 9 verbunden, die im übrigen die Einstellung eines gewünschten Senders steuert und die über das Bedienteil 10 gestartet wird. Das Bedienteil kann wiederum mit dem Verkehrsfunkdecoder 8 zur Vorwahl eines bestimmten Verkehrsfunkbereiches verbunden werden.

Das Ausgangssignal der ZF-Stufe 3 wird in dem Detektor 11 des in Fig. 2 dargestellten Verkehrsfunkdecoders 8 auf das Vorhandensein eines amplitudenmodulierten 57-kHz-Hilfsträgers untersucht. In dem Demodulator 12 wird die Amplitudenmodulation vom Hilfsträger getrennt. Diese Modulation kann aus einer Bereichskennung BK und bei einer Verkehrsdurchsage zusätzlich aus einer Durchsagekennung DK bestehen.

Zwei parallel geschaltete Filter 13, 14, ersteres mit einem Durchlassbereich, der nur die Bereichskennungen umfasst, und letzteres mit einem Durchlassbereich allein für die Durchsagekennung trennen die beiden möglichen Kennungen. An den Ausgang des Filters 14, das nur die Durchsagekennungen durchlässt, ist ein Durchsagekennungsdecoder 19 angeschlossen. Dessen Ausgangssignal wird zur Koinzidenzstufe 18 weitergeleitet.

An dem Ausgang des Filters 13 liegt ein BK-Decoder 17, der die von dem empfangenen Verkehrsfunksender übermittelte Bereichskennung anzeigt und für den Fall, dass über das Bedienteil 10 ein bestimmter Verkehrsfunkbereich vorgewählt ist – gestrichelt dargestellt –, ein Steuersignal an eine Koinzidenzstufe 18 abgibt, wenn die vorgewählte und die übermittelte BK übereinstimmt.

Wenn an den Eingängen der Koinzidenzstufe 18 gleichzeitig ein Signal anliegt, erhält die Umschaltstufe 4 einen Schaltimpuls, welcher die Durchschaltung des Empfängers auf die NF-Stufe 6 bewirkt.

Die Umschalteinrichtung 4 in den NF-Stufen des Empfängers spricht mithin jedesmal dann an, wenn der eingestellte Verkehrsfunksender eine Verkehrsfunkdurchsage durchgibt und das Kombinationsgerät auf Tonbandwiedergabe geschaltet ist, bzw. nur dann, wenn der eingestellte Verkehrsfunksender auch dem vorgewählten Verkehrsfunkbereich zugeordnet ist und über diesen Sender eine Durchsage verbreitet wird.

Das Filter 13 ist ausserdem mit einer Messeinrichtung 15 für den Modulationsgrad des Hilfsträgers durch die Bereichskennung verbunden. Solange der Messwert über dem als Sollwert vorgegebenen Modulationsgrad liegt, erhält eine Koinzidenzstufe 16 von der Messeinrichtung 15 ein Steuersignal. An einem weiteren Eingang der Koinzidenzstufe 16 liegt zugleich auch der Hilfsträger an. Das Ausgangssignal der Koinzidenzstufe 16 wird dann in der Sendersuchlaufeinrichtung 9 als Kriterium für das Vorhandensein des 57-kHz-Hilfsträgers weiterverarbeitet, z.B. als Stoppsignal für den Sendersuchlauf.

Der bis hierher beschriebene Teil des Verkehrsfunkdecoders 8 gehört zum Stand der Technik und wird in vielen Verkehrsfunkempfängern verwendet.

Gemäss der vorliegenden Erfindung ist die Messeinrichtung 15 in dieser bekannten Schaltung in der Weise abgewandelt, dass sie ebenfalls ein Steuersignal für die Umschalteinrichtung 4 in der NF-Stufe liefert, sobald sich in der Messeinrichtung ein signifikanter Abfall des Modulationsgrades des Hilfsträgers von dem vorgegebenen Wert – hier 60% – zeigt.

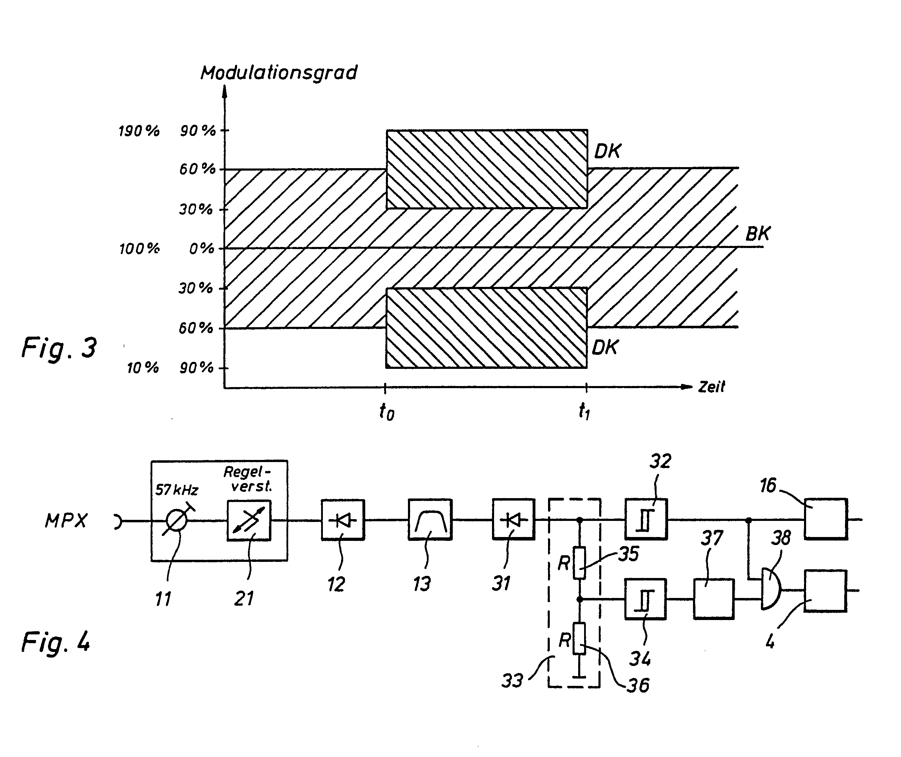

Eine hierfür geeignete Schaltung ist im Detail in Fig. 4 dargestellt, während sie in Fig. 2 summarisch mit 34-37 bezeichnet ist. Das Ausgangssignal dieser Schaltung wird der Koinzidenzstufe 18 zugeführt, die mithin nur dann ein Steuersignal an die Umschalteinrichtung weiterleitet, wenn sowohl die Durchsagekennung als auch der Abfall des Modulationsgrades registriert wird.

In einfacheren Geräten kann auch die Umschalteinrichtung 4 allein durch das Ausgangssignal der abgewandelten Messeinrichtung gesteuert werden. Dies ist in Fig. 2 durch die gestrichelte Verbindung zwischen der erweiterten Messeinrichtung und der Umschalteinrichtung 4 angedeutet.

Der eben erwähnte Abfall des Modulationsgrades ist bei dem eingeführten Kennungssystem nicht vorhanden, doch in der gleichzeitig eingereichten Patentanmeldung EP-A Nr. 65616 für einen UKW-Sender vorgeschlagen. Der darin vorgesehene Abfall des Modulationsgrades des Hilfsträgers durch die Bereichskennung ist in Fig. 3 dargestellt und eröffnet die Möglichkeit, die Amplitudenmodulation des Hilfsträgers durch die Durchsagekennung auf 60% zu erhöhen. Fig. 3 zeigt den zeitlichen Verlauf der Modulation des Hilfsträgers nach dem modifizierten Verfahren. Entsprechend dieser Modifikation wird der Modulationsgrad des Hilfsträgers durch die Bereichskennung im Augenblick der Einschaltung der Durchsage $t_0$ von 60 auf 30% zurückgenommen. Zusätzlich wird die Durchsagekennung eingeschaltet, die die Hilfsträgeramplitude ihrerseits mit 60% moduliert.

Am Ende der Durchsage zum Zeitpunkt $t_1$ entfällt die Durchsagekennung wieder und die Verringerung der Amplitudenmodulation des Hilfsträgers durch die Bereichskennung wird aufgehoben. Der signifikante Abfall des Modulationsgrades des Hilfsträgers allein durch die Bereichskennung beträgt demnach 50% seines ursprünglich vorgegebenen Wertes, d.h. deren Modulationsgrad fällt von über 50 auf unter 50%.

In der Messeinrichtung nach Fig. 4 wird aus der Nutzmodulation MPX des Senders durch den 57-kHz-Dektektor 11 der Hilfsträger mit seiner Amplitudenmodulation ausgefiltert. Der Detektor umfasst einen Regelverstärker 21, der für eine Konstanz der Amplitude des Hilfsträgers sorgt. Solche Regelverstärker sind bekannt. Die Zeitkonstante des Regelverstärkers 21 ist erheblich grösser als die Periodendauer der niedrigsten Modulationsfrequenz des Hilfsträgers, sie kann 1 s und mehr betragen. In dem nachfolgenden Demodulator 12 wird das Ausgangssignal des Detektors demoduliert, so dass am Ausgang des Demodulators die gesamte Amplitudenmodulation des Hilfsträgers verfügbar ist.

In Fig. 4 hat der an den Ausgang des Modulators 12 angeschlossenen Bande- oder Tiefpass 13 eine obere Grenzfrequenz, die der höchsten Bereichskennfrequenz entspricht. Sein Ausgangssignal wird in dem Gleichrichter 31 gleichgerichtet.

Da der Hilfsträger in dem Regelverstärker 21 konstant gehalten wird, ist die Ausgangsamplitude des Gleichrichters 31 dem Modulationsgrad des Hilfsträgers eindeutig zugeordnet. Mit dem Ausgangssignal des Gleichrichters 31 wird ein erster Schwellwertschalter 32, ein Schmitt-Trigger, direkt gesteuert, während ein anderer Schmitt-Trigger als Schwellwertschalter 34 über einen Spannungsteiler 33 angeschlossen ist, dessen Teilwiderstände 35, 36 gleich gross sind. Die Schaltung ist so ausgelegt, dass der Schmitt-Trigger 32 anspricht, sobald der Modulationsgrad des Hilfsträgers von 30% überschritten wird. Der Schwellwertschalter 32 ist somit dem niedrigen Modulationsgrad zugeordnet.

Der zweite Schmitt-Trigger 34 spricht bei gleicher Auslegung jedoch erst an, wenn der Modulationsgrad des Hilfsträgers 60% erreicht, er ist somit dem höheren Modulationsgrad zugeordnet. Die Ausgangssignale der beiden Schmitt-Trigger 32, 34 sind in einer logischen UND-Stufe 38 zusammengefasst, wobei jedoch zwischen dem Ausgang des Schmitt-Triggers 34 und der UND-Stufe 38 eine Umkehrstufe 37 eingefügt ist. Die UND-Stufe 38 liefert ein Steuersignal für die Umschaltstufe 4, sobald der Modulationsgrad des Hilfsträgers von 60 auf 30% sinkt und dort verhart. Wenn der Modulationsgrad des Hilfsträgers wieder auf 60% ansteigt, entfällt das Steuersignal für die Umschalteinrichtung 4, die bei früher eingeschaltetem Tonbandgerätbetrieb dann auf dessen Wiedergabe zurückgestellt wird.

Wenn das dem Modulationsgrad proportionale Ausgangssignal des Gleichrichters 31 dem Modulationsgrad von 60% entspricht, sind beide Schwellwertschalter, die bei 30% ansprechen, geschaltet. Das Ausgangssignal des zweiten Schwellwertschalters wird jedoch in der Umkehrstufe 37 invertiert und es liegt keine Koinzidenz in der UND-Stufe 38 vor. Wenn der Modulationsgrad auf etwa 30% fällt, bleibt der erste Schmitt-Trigger 32 geschaltet, während der zweite Schmitt-Trigger 34 infolge der durch den Spannungsteiler verringerten Eingangsspannung zurückgesetzt wird und nunmehr über die Umkehrstufe 37 ein zur Koinzidenz führendes Signal liefert.

Das Ausgangssignal des Schmitt-Triggers 32 kann zur Anzeige des Vorhandenseins des Hilfsträgers genutzt werden und stellt eine Variante der Koinzidenzstufe 16 der Fig. 2 dar.

Es ist in vielen Fällen zweckmässig, das Ausgangssignal der UND-Schaltung 38 in der Koinzidenzschaltung 18 am Ausgang des Durchsagekennungsdecoders mit auszuwerten wie in Fig. 2 dargestellt ist. Man erhält dann die Umschaltsignale für die Umschalteinrichtung erst, wenn sowohl die Durchsagekennung als auch der Abfall des Modulationsgrade des Hilfsträgers durch die Bereichskennung festgestellt ist. Diese Massnahme erweist sich als Vorteil, wenn mehrere Durchsagekennungen für verschiedene Programmarten benötigt werden und diese in einem Frequenzbereich liegen, der unmittelbar an die untere Grenzfrequenz der eigentlichen Rundfunksendung anschliesst.

## Patentansprüche

1. Für ein Rundfunk-Übertragungssystem bestimmter UKW-Empfänger mit einem Frequenz-Demodulator für die Sendersignale, einem Detektor (11) für einem amplitudenmodulierten 57-kHz-Hilfsträger in dem Sendersignal und einem Amplitudendemodulator (12) für den 57-kHz-Hilfsträger, ferner mit Umschalteinrichtungen (4) innerhalb der NF-Stufe, die durch die Amplitudenmodulation des Hilfsträgers steuerbar sind und mit einer Messeinrichtung (15, 34-37) für den Grad der Modulation des Hilfsträgers durch die Bereichskennungen, dadurch gekennzeichnet, dass die Messeinrichtung (15, 34-37) bei einem signifikanten Abfall des Modulationsgrades des Hilfsträgers durch die Bereichskennungen von einem vorgegebenen Wert aus auf einen niedrigeren Modulationsgrad und während dessen Dauer ein Steuersignal für die Umschalteinrichtung (4) in der NF-Stufe auslöst.

2. UKW-Empfänger nach Anspruch 1, dadurch gekennzeichnet, dass die Messeinrichtung bei einem Abfall des Modulationsgrades von im wesentlichen 50% des vorgegebenen Wertes ein Steuersignal auslöst.

3. UKW-Empfänger nach Anspruch 1 oder 2, dadurch gekennzeichnet, dass die Messeinrichtung bei einem Abfall des Modulationsgrades von über 50% Modulationsgrad auf unter 50% Modulationsgrad ein Steuersignal für die Umschalteinrichtung (4) in der NF-Stufe auslöst.

4. UKW-Empfänger nach Anspruch 3, dadurch gekennzeichnet, dass die Messeinrichtung (15, 34-37) bei einem Abfall des Modulationsgrades von 60 auf 30% ein Steuersignal für die Umschalteinrichtung (4) in der NF-Stufe auslöst.

5. UKW-Empfänger nach einem der Ansprüche 1 bis 4, dadurch gekennzeichnet, dass dem Detektor (11) für den Hilfsträger ein Regelverstärker (21) und diesem ein Filter (13) für den den Bereichskennungen zugeordneten Frequenzbereich nachgeschaltet ist, dass die darauf folgende Messeinrichtung einen Gleichrichter (23) und zwei Schwellwertschalter (34, 36) umfasst, dass der Ausgang des zweiten, einem höheren Modulationsgrad zugeordneten Schwellwertschalters (34) über eine Umkehrstufe (38) mit dem zweiten Eingang einer UND-Schaltung (37) verbunden ist, deren erster Eingang direkt an den Ausgang des ersten, einem niedrigeren Modulationsgrad zugeordneten Schwellwertschalter (32) angeschlossen ist und dass das Ausgangssignal der UND-Schaltung die Umschalteinrichtung (4) steuert.

6. UKW-Empfänger nach Anspruch 5, dadurch gekennzeichnet, dass zwischen dem Gleichrichterausgang und dem Eingang des zweiten Schwellwertschalters (34) ein Spannungsteiler (33) geschaltet ist, dessen Teilwiderstände (35, 36) gleich gross sind, und dass beide Schwellwertschalter auf einen Schwellwert eingestellt sind, der einem Modulationsgrad von 30% entspricht.

7. UKW-Empfänger nach einem der Ansprüche 1 bis 6 mit einem Durchsagekennungs-Decoder, dadurch gekennzeichnet, dass der Ausgang der Messeinrichtung mit dem ersten Eingang einer Koinzidenzstufe (18) verbunden ist, deren zweiter Eingang an dem Ausgang des Durchsagekennungs-Decoders (19) liegt, und dass das Ausgangssignal der Koinzidenzstufe (18) die Umschalteinrichtung (4) steuert.

## Claims

1. VHF receiver, intended for a broadcast transmission system, having a frequency demodulator for the transmitter signals, a detector (11) for an amplitude-modulated 57-kHz subcarrier contained in the transmitter signal and an amplitude modulator (12) for the 57-kHz subcarrier, additionally provided with switch-over devices (4) within the LF stage which devices are controllable by the amplitude modulation of the subcarrier and having a device (15, 34-37) for measuring the degree to which the subcarrier is modulated by the area identification signals, characterised in that the measuring device (15, 34-37) triggers a control signal for the switch-over device (4) in the LF stage when the percentage of modulation of the subcarrier by the area identification signals drops significantly from a predetermined value to a lower modulation percentage and for the duration of the latter.

2. A VHF receiver according to Claim 1, characterised in that the measuring device triggers a control signal when the modulation percentage drops by essentially 50% of the predetermined value.

3. A VHF receiver according to Claim 1 or 2, characterised in that the measuring device triggers a control signal for the switch-over device (4) in the LF stage when the degree of modulation drops from a modulation percentage of over 50% to a modulation percentage of less than 50%.

4. A VHF receiver according to Claim 3, characterised in that the measuring device (15, 34-37) triggers a control signal for the switch-over device (4) in the LF stage when the modulation percentage drops from 60 to 30%.

5. A VHF receiver according to one of Claims 1 to 4, characterised in that the detector (11) for the subcarrier is followed by an AGC amplifier (21) and this is followed by a filter (13) for the frequency range allocated to the area identification signals, that the subsequent measuring device comprises a rectifier (23) and two threshold switches (34, 36), that the output of the second threshold switch (34), allocated to a higher modulation percentage, is connected via an inverter stage (38) to the second input of an AND circuit (37) the first input of which is connected directly to the output of the first threshold switch (32), allocated to a lower modulation percentage, and that the output signal of the AND circuit controls the switch-over device (4).

6. A VHF receiver according to Claim 5, characterised in that, between the rectifier output and the input of the second threshold switch (34), a voltage divider (33) is connected, the dividing resistances (33, 36) of which are of equal magnitude, and that the two threshold switches are set for a threshold corresponding to a modulation percentage of 30%.

7. A VHF receiver according to one of Claims 1 to 6, provided with an announcement identification decoder, characterised in that the output of the measuring device is connected to the first input of a coincidence stage (18) the second input of which is located at the output of the announcement identification decoder (19) and that the output signal of the coincidence stage (18) controls the switch-over device (4).

## Revendications

1. Récepteur d'ondes très courtes destiné à un système de transmission radio avec un démodulateur de fréquence pour les signaux d'émission, un détecteur (11) pour une porteuse auxiliaire à 57 kHz modulée en amplitude dans le signal d'émetteur et un démodulateur d'amplitude (12) pour la porteuse auxiliaire à 57 kHz, en outre une installation de commutation (4) dans l'étage (BF) et qui est susceptible d'être commandée par la modulation d'amplitude de la porteuse auxiliaire, et une installation de mesure (15, 34-37) pour le degré de modulation de la porteuse auxiliaire par les caractéristiques de zone, caractérisé en ce que l'installation de mesure (15, 34-37), pour une chute significative du degré de modulation de la porteuse auxiliaire par la caractéristique de zone, à partir d'une valeur prédéterminée, déclenche un signal de commande pour l'installation de commutation (4) dans l'étage (BF), pour un faible degré de modulation et pendant sa durée.

2. Récepteur OTC selon la revendication 1, caractérisé en ce que l'installation de mesure déclenche un signal de commande lors d'une chute du degré de modulation à partir d'une valeur prédéterminée essentiellement supérieure à 50% au degré de modulation.

3. Récepteur OTC selon l'une des revendications 1 ou 2, caractérisé en ce que l'installation de mesure déclenche un signal de commande de l'installation de commutation (4) dans l'étage (BF) si le degré de modulation chute de plus de 50% sous un degré de modulation à 50%.

4. Récepteur OTC selon la revendication 3, caractérisé en ce que l'installation de mesure (15, 34-37) déclenche un signal de commande pour l'installation de commutation (4) de l'étage (BF), lors de la chute du degré de modulation de 60 à 30%.

5. Récepteur OTC selon l'une des revendications 1 à 4, caractérisé en ce que le détecteur (11) pour la porteuse auxiliaire est suivi d'un amplificateur de réglage (21) et celui-ci d'un filtre (13) pour la zone de fréquence associée aux caractéristiques de zone, en ce que l'installation de mesure suivante comporte un redresseur (23) et deux commutateurs à seuil (34, 36), en ce que la sortie du second commutateur à seuil (34), auquel est associé un degré de modulation plus élevé, est reliée par un étage-inverseur (38) à la seconde entrée d'une porte ET (37) dont l'autre entrée est reliée directement à la sortie de la première, avec un commutateur à valeur de seuil (32), associé au degré de modulation le plus faible, est raccordée, et en ce que le signal de sortie de la porte ET commande l'installation de commutation.

6. Récepteur OTC selon la revendication 5, caractérisé en ce qu'entre la sortie du redresseur et l'entrée du second commutateur à valeur de seuil (34) est prévu un diviseur de tension (33) dont les résistances partielles (35, 36) ont la même valeur et en ce que les deux commutateurs à valeur de seuil sont réglés pour une valeur de seuil qui correspond à un degré de modulation de 30%.

7. Récepteur OTC selon l'une des revendications 1 à 6 avec un décodeur de caractéristique de message, caractérisé en ce que la sortie de l'installation de mesure est reliée à la première entrée d'un étage de coïncidence (18) dont la seconde entrée est reliée à la sortie du décodeur de caractéristique de message (19) et en ce que le signal de sortie de l'étage de coïncidence (18) commande l'installation de commutation (4).

Fig. 1

Fig. 2

Fig. 3

Fig. 4

0 066 037